# DEMANDE DE BREVET EUROPEEN

(11) **EP 0 968 876 A1**
(43) Date de publication de la demande: **05.01.2000**
(21) Numéro de dépôt: 98870145.4
(22) Date de dépôt: 30.06.1998
(51) Int. Cl.: B60N 3/08, B65F 1/06

(54) **Poubelle de véhicule**

(71) Demandeur: Symbol S.A./N.V., 1150 Bruxelles (BE)
(72) Inventeur: Donck, Kathleen, 3090 Overijse (BE); Donck, Reynald, 3090 Overijse (BE)
(74) Mandataire: Bairiot-Delcoux, Mariette

(57) **Abrégé**

Réceptacle à déchets pour véhicule comprenant un dispositif de fermeture (2) et une enveloppe extérieure souple (1) dont le dispositif de fermeture (2) comprend deux mâchoires articulées (6, 7) les articulations de ces mâchoires (6, 7) comprenant un moyen de rappel (8), les faces (9, 10) de ces mâchoires (6, 7) venant en contact lorsque ces mâchoires sont fermées étant telles qu'elles réalisent un contact hermétique aux odeurs; des moyens d'accrochage (11) pour une série de sacs intérieurs jetables (12, 13) sont disposés près de l'embouchure supérieure de ce réceptacle.

## Description

L'invention concerne des réceptacles à déchets à installer dans un véhicule, et plus particulièrement dans les véhicules automobiles (voitures personnelles, camions, etc).

Les consommateurs ont désormais une conscience de plus en plus aiguë de la nécessité de respecter l'environnement.

Il se pose cependant un problème dans le cas de personnes en déplacement à bord d'un véhicule, dans lequel la place disponible est restreinte.

Les emplacements de parking pourvus de collecteurs de déchets n'étant pas légion, de nombreux usagers ont encore le réflexe de se débarrasser plus au moins discrètement de leurs déchets sur la route ou sur ses bas-côtés.

Les fabricants de véhicules estiment - à juste titre - que la présence d'un grand réceptacle à déchets ne constitue pas un argument de vente majeur.

En conséquence, ces réceptacles, lorsqu'il y en a un, ont des dimensions extrêmement modestes et, à la limite, symboliques.

La solution qui apparait la plus évidente à première vue est de concevoir un réceptacle à déchets qui puisse être placé par l'usager dans son véhicule.

Il existe, de fait, de nombreux modèles de poubelles pour véhicules.

On connaît par US-5,524,762, FR-2.727.067 et FR-2.414.010 des supports pour des sacs-poubelles jetables destinés à être suspendu à un panneau d'un véhicule, tel que par exemple celui de la boîte à gants.

De tels dispositifs sont fragiles, peu esthétiques et n'empêchent pas les odeurs de se répandre dans l'habitacle.

DE-42 33 920 décrit un dispositif à soufflet pourvu d'un rouleau de sacs détachables. Le problème est ici lié à la manipulation: les sacs sont relativement malaisés à fixer et l'herméticité est assurée par un verrou qui doit être actionné par l'utilisateur.

Certains dispositifs sont munis d'ouvertures béantes (tel GB-2.123.274), très encombrantes ou de systèmes de fermeture réclamant une certaine force, voire l'usage des deux mains (US-3,632,209).

Tous les modèles que l'on trouve sur le marché présentent donc, à des degrés divers, des inconvénients qui rendent leur usage très épisodique et marginal.

Un inconvénient majeur, est lié à la salubrité: il est indispensable que les déchets enfermés pendant de longs trajets ne rappellent pas constamment leur présence par des odeurs ou des suintements poisseux divers. Il est aussi indispensable que le contenu de la poubelle puisse être facilement évacué.

Un autre inconvénient est lié à la sécurité: il est impératif qu'un tel réceptacle ait un encombrement minimum et que les déchets, en cas d'accident, ne se transforment pas en autant de projectiles dans l'habitacle.

Il faut aussi qu'en dépit de son herméticité, la poubelle puisse s'ouvrir facilement et, de préférence, d'une seule main. Si ce n'est pas le cas, on n'en fera pas un usage systématique et, plus grave, elle risque de distraire momentanément l'attention du conducteur, qui a tout intérêt à rester focalisée sur la conduite du véhicule.

L'inconvénient qui joue vraisemblablement le plus grand rôle, en l'occurrence, est simplement lié à l'esthétique. Les organes liés à l'élimination des déchets doivent être évoqués avec discrétion dans la société actuelle, même et surtout dans le contexte d'un objet lié au standing comme l'automobile.

L'objet de l'invention est un réceptacle à déchets pour véhicule comprenant un dispositif de fermeture et une enveloppe extérieure souple dans lequel le dispositif de fermeture comprend deux mâchoires articulées, les articulations de ces mâchoires comprenant un moyen de rappel (en particulier un ressort à boudin). Les faces de ces mâchoires venant en contact lorsque ces mâchoires sont fermées sont telles qu'elles réalisent un contact hermétique aux odeurs.

Des moyens d'accrochage pour au moins un sac intérieur jetable sont disposés près de l'embouchure supérieure dudit réceptacle.

La force des moyens de rappel est telle que l'ouverture du réceptacle peut être actionnée d'une seule main.

De préférence, les moyens d'accrochage sont tels qu'ils permettent de fixer simultanément une série de sacs jetables-gigognes enfilés les uns dans les autres et de désolidariser sélectivement le sac intérieur d'une telle série.

Le dispositif de fermeture est avantageusement réalisé en un matériau rigide résistant à une température comprise entre -20 et +80°C, tel que, par exemple un polyamide chargé de fibre de verre (la charge en fibre de verre est de préférence de l'ordre de 25%).

L'invention a également pour objet une série de sac-gigogne pour un réceptacle tel que décrit ci-dessus qui comprend une succession de sacs jetables en plastique souple enfilés les uns dans les autres de façon telle que leurs faces coïncident, lesdits sacs comportant des moyens de fixation aptes à coopérer avec les moyens d'accrochage correspondants d'un réceptacle, la face de chaque sac comportant une patte rabattable apte à être nouée avec la patte correspondante de l'autre face dudit sac de façon à obtenir une fermeture pratiquement hermétique.

Cette série de sac-gigogne comprend avantageusement au moins 5 sacs successifs.

Le sac disposé à l'extérieur de ladite série est de préférence pourvu d'un signe distinctif.

D'autres particularités et avantages de l'invention ressortiront de la description ci-après de formes de réalisations particulières, référence étant faite aux dessins annexés dans lesquels
La Fig. 1 est une vue générale en perspective d'un réceptacle à déchets de l'invention.
La Fig. 2 est une vue plus détaillée du dispositif de fermeture de ce réceptacle, et d'un sac jetable.
La Fig. 3 est une vue en perspective du dispositif muni d'une série de sacs intérieurs jetables suivant l'invention.
La Fig. 4 est une vue schématique éclatée d'une série de sacs intérieur-gigogne.
La Fig. 5 est une vue schématique de ces sacs-gigognes lors de l'extraction d'un sac intérieur rempli.
Les Figs. 6, 7 sont des vues latérales du réceptacle, respectivement fermé et ouvert.
La Fig. 8 est une vue agrandie d'un détail de la Fig. 6.

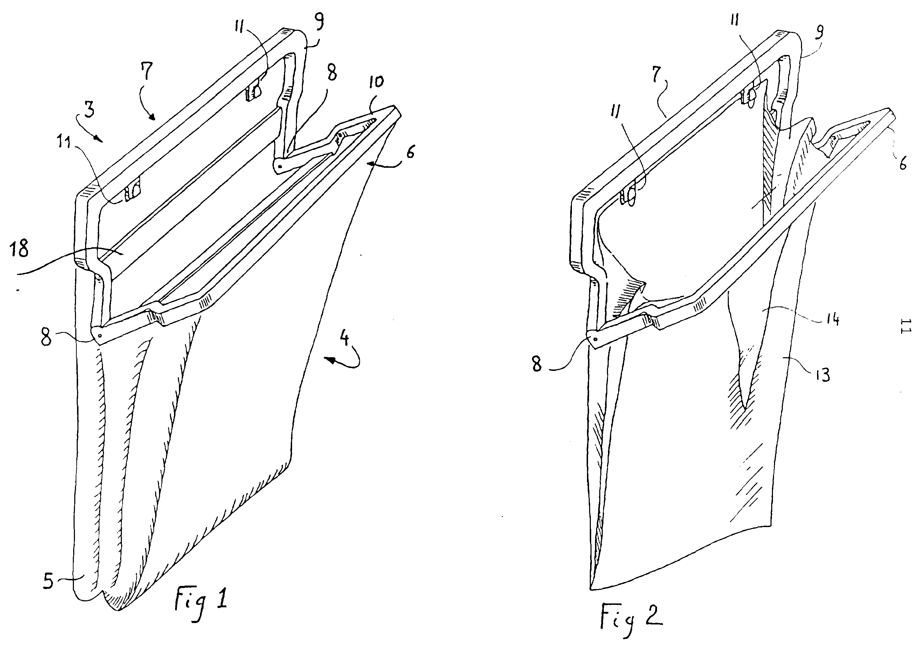

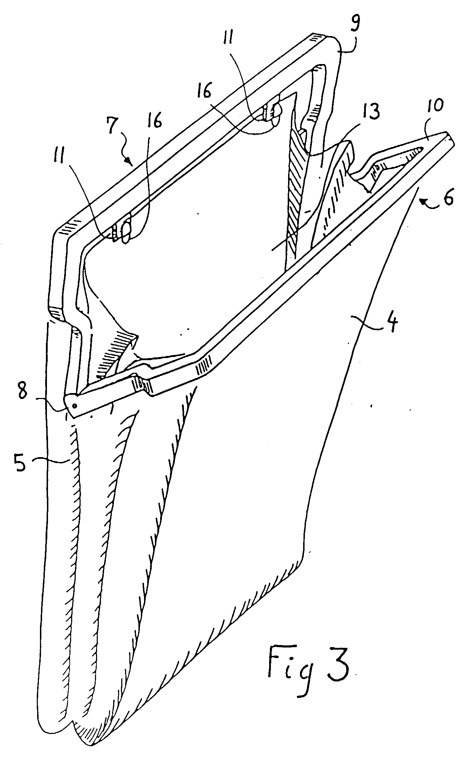

Les Figs. 1 et 2 mettent en évidence le mécanisme très simple du dispositif de l'invention. Il comprend une enveloppe extérieure 1 ou habillage et un mécanisme de fermeture et d'accrochage destiné à la fixation de sacs jetables.

L'enveloppe externe 1 comporte deux panneaux 3, 4, soit un panneau arrière 3 destiné à être appliqué contre un support dans un véhicule, et un panneau frontal 4. Ces deux panneaux 3, 4 sont reliés par des soufflets latéraux 5. Le panneau frontal 4 et les soufflets 5 étant exposés aux regards sont réalisés généralement en un matériau souple et de qualité dont la texture et la couleur sont assortis aux éléments de l'habitacle du véhicule.

Le mécanisme de fermeture 2 (ou fermoir), mieux visible sur la Fig. 2 comprend deux mâchoires 6, 7 articulées l'une par rapport à l'autre. L'articulation comprend un dispositif de rappel 8 tel qu'un ressort.

Les mâchoires 6, 7 comportent chacune une face 9, 10 disposée en vis-à-vis de la face 10, 9 correspondante sur l'autre mâchoire 7, 6 lorsque ces deux mâchoires 6, 7 sont fermées. Les profils de ces faces 9, 10 coopèrent de façon telle que l'on obtient, par le simple effet des moyens de rappel 8, une fermeture hermétique aux odeurs.

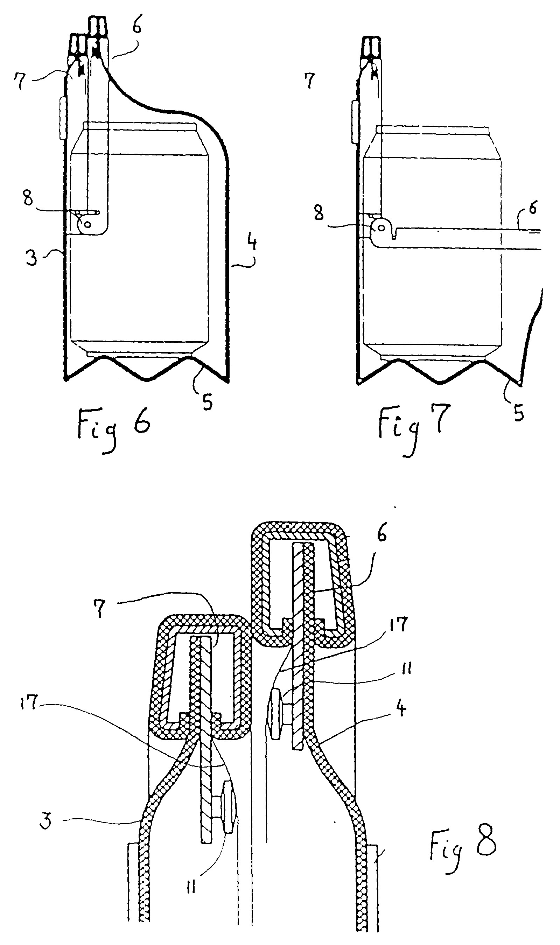

Par ailleurs, les côtés des deux mâchoires 6, 7 sont de longueur légèrement différentes, la mâchoire 6, disposée du côté du panneau frontal 4, dépassant légèrement vers le haut par rapport à la mâchoire 7 attenante au panneau arrière 3 (comme on peut le voir de façon plus détaillée sur les Figs. 6 et 8).

Cette configuration offre un double avantage: elle permet de commander très facilement l'ouverture du dispositif en opérant une traction sur la partie 6 saillant vers le haut et, d'autre part, les mâchoires 6, 7 reviennent d'elles-mêmes en position de fermeture hermétique sans qu'il soit nécessaire d'y prêter attention. Le conducteur isolé peut donc actionner le réceptacle à déchets d'une seule main sans distraire son attention de la conduite de son véhicule.

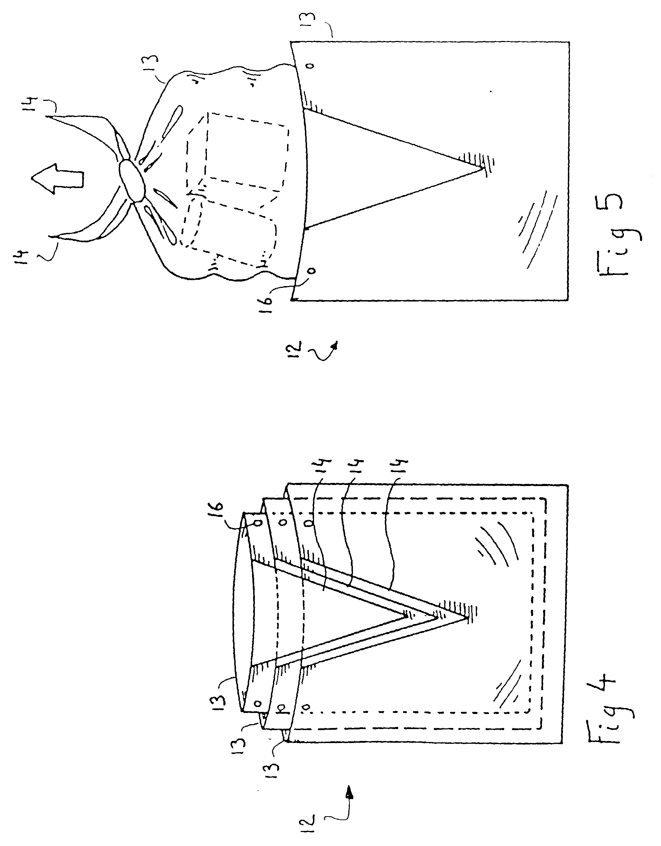

Une autre particularité du réceptacle de l'invention tient à la manipulation des déchets eux-mêmes. Le mécanisme de fermeture 2 comprend en effet des moyens d'accrochage 11 permettant de disposer à l'intérieur de l'enveloppe une série 12 de sacs jetables 13 enfilés les uns dans les autres, comme on le voit mieux à la Fig. 4. Chacun de ces sacs 13 est muni de deux pattes supérieures 14 rabattues latéralement sur les pans 15.

De tels sacs-gigognes sont destinés à être commercialisés par séries 12 comprenant un certain nombre d'unités (par exemple, 10 unités).

Les pans avant et arrière 15 des sacs-gigognes de chaque série 12 sont fixés par des moyens d'accrochage adéquats (ici des boutonnières 16) coopérant respectivement avec les moyens d'accrochage (11) de la mâchoire avant 6 et de la mâchoire arrière 7 du mécanisme de fermeture 2 de façon à faire bailler les sacs 13 dès que l'on écarte ces mâchoires 6, 7 l'une de l'autre, comme représenté à la Fig. 7.

La propreté du réceptacle est assurée en outre, comme on le voit aux Figs. 3 et 8, par des rabats 17 recouvrant l'embouchure des sacs jetables.

Lorsque le réceptacle semble plein, il suffit, dès qu'apparait le long de la route ou de l'étape un conteneur à déchets ad hoc, de relever les rabats 17, de saisir les deux pattes 14 du sac-gigogne 13 placé le plus à l'intérieur de la série 12 et de l'extraire du réceptacle, le sac 13 suivant étant de la sorte directement disponible et fonctionnel. Les pattes 14 nouées entre elles assurent au sac 13 dont on souhaite se débarrasser une herméticité suffisante pour que l'on puisse le manipuler en toute sérénité.

Avantageusement, le ou les sacs 13 disposés le plus à l'extérieur d'une série 12 sont pourvus d'un signe distinctif; il sont par exemple réalisés en un plastique d'une couleur différente, de façon à prévenir l'usager qu'il y a lieu d'insérer une nouvelle série 12 de sacs-gigognes 13 dans le réceptacle.

Le réceptacle de l'invention peut se présenter en différents formats et avec différents habillages appropriés à une grande variété de véhicules et adaptés à différents types d'étapes. Pour des étapes courtes et répétées, les dimensions peuvent être réduites à 1 à 2 litres (soit une capacité correspondant à quelques cannettes de boissons - de préférence non alcoolisées -).

Pour des longues étapes, voire pour des véhicules de fret, la capacité peut aller jusqu'à 5 litres, en fonction de la place disponible dans le véhicule.

Le réceptacle de l'invention peut être intégré dès la fabrication dans la sellerie du véhicule ou faire l'objet d'un montage séparé à l'aide d'éléments de fixation adéquats généralement connus en soi.

L'emplacement le plus approprié au vu des contraintes d'encombrement et de sécurité sera généralement la face arrière des sièges avant du véhicule ou les flancs de l'habitacle.

Dans le cas de véhicules pourvus d'une console centrale, le réceptacle peut être disposé sur les flancs d'une telle console sans occasionner de gêne.

Comme il s'agit d'un élément durable de l'habitacle, la face frontale 4 et les soufflets 5 peuvent être réalisés en matériaux nobles, simili-cuir ou cuir véritable.

Les sollicitations répétées auxquelles sont soumises les mâchoires 6, 7 du mécanisme de fermeture 2 font préférer pour ces organes un matériau résistant qui peut être du métal mais de préférence un polyamide chargé de fibre de verre (notamment, polyamide 66 chargé à 25%) ou toute autre matière plastique permettant d'obtenir une rigidité suffisante des pièces jusqu'à une température ambiante de 80°C.

La solidarisation des pièces du mécanisme de fermeture 2 et de l'enveloppe extérieure 1 peut être réalisée par emboîtement ou par rivetage (voir Fig. 8).

Les mâchoires peuvent comporter une barre de renforcement 18 telle que montrée à la Fig. 1.

La conception du réceptacle permet le placement ou l'impression de motifs publicitaires apparents pour un passager (notamment pour les véhicules utilisés comme taxis) sur toute la largeur de la face frontale.

La fixation du réceptacle dans l'habitacle d'un véhicule s'opère par des moyens de fixation classiques par exemple par vis, courroies, et accrochage par contact (crochet et bouclettes).

## Revendications

1. Réceptacle à déchets pour véhicule comprenant un dispositif de fermeture (2) et une enveloppe extérieure souple (1), caractérisé en ce que
le dispositif de fermeture (2) comprend deux mâchoires articulées (6, 7), les articulations de ces mâchoires (6, 7) comprenant un moyen de rappel (8), ces mâchoires (6, 7) venant en contact lorsque le dispositif est fermé, de telle manière qu'elles réalisent un contact hermétique aux odeurs, des moyens d'accrochage (11) pour au moins un sac intérieur jetable (12, 13) étant disposés près de l'embouchure supérieure dudit réceptacle.

2. Réceptacle à déchets suivant la revendication 1, caractérisé en ce que les moyens d'accrochage (11) sont tels qu'ils permettent de fixer simultanément une série (12) de sacs jetables-gigognes (13) enfilés les uns dans les autres et de désolidariser sélectivement le sac intérieur (13) d'une telle série (12).

3. Réceptacle à déchets suivant l'une quelconque des revendications 1 et 2 caractérisé en ce que le dispositif de fermeture (2) est réalisé en un matériau rigide résistant à une température comprise entre -20 et +80°C.

4. Réceptacle suivant la revendication 3, caractérisé en ce que ledit matériau rigide comprend au moins un polyamide chargé de fibre de verre.

5. Réceptacle suivant la revendication 4, caractérisé en ce que la charge en fibre de verre est d'environ 25%.

6. Réceptacle suivant l'une quelconque des revendications précédentes, caractérisé en ce que le moyen de rappel (8) est un ressort métallique à boudin.

7. Réceptacle suivant l'une quelconque des revendications précédentes, caractérisé en ce qu'il comprend des rabats (17) recouvrant l'embouchure des sacs intérieurs (13).

8. Série de sac-gigogne pour un réceptacle suivant l'une quelconque des revendications précédentes, caractérisé en ce qu'elle comprend une succession de sacs jetables (13) en plastique souple enfilés les uns dans les autres de façon telle que leurs faces (15) coïncident, lesdits sacs (13) comportant des moyens de fixation (16) aptes à coopérer avec les moyens d'accrochage (11) correspondants d'un réceptacle, la face (15) de chaque sac comportant une patte (14) rabattable apte à être nouée avec la patte (14) correspondante de l'autre face dudit sac (13) de façon à obtenir une fermeture pratiquement hermétique.

9. Série de sac-gigogne suivant la revendication 8, caractérisée en ce qu'elle comprend au moins 5 sacs successifs.

10. Série de sac-gigogne suivant la revendication 9, caractérisée en ce que au moins un sac (13) disposé à l'extérieur de ladite série (12) est pourvu d'un signe distinctif.
